**Europäisches Patentamt**

**European Patent Office**

**Office européen des brevets**

(19)

(11) Veröffentlichungsnummer: **0 026 283**
**B1**

(12) **EUROPÄISCHE PATENTSCHRIFT**

(45) Veröffentlichungstag der Patentschrift:
05.05.82

(51) Int. Cl.³: **B 60 J 3/02,** F 16 C 11/04

(21) Anmeldenummer: **80104309.2**

(22) Anmeldetag: **23.07.80**

(54) **Schwenklager für Sonnenblenden.**

(30) Priorität: **27.09.79 DE 2939145**

(43) Veröffentlichungstag der Anmeldung:
**08.04.81 Patentblatt 81/14**

(45) Bekanntmachung des Hinweises auf die Patenterteilung:
**05.05.82 Patentblatt 82/18**

(84) Benannte Vertragsstaaten:
**DE FR GB IT SE**

(56) Entgegenhaltungen:
**DE-A-2 544 969**
**DE-B-2 420 264**
**DE-C-2 653 988**
**GB-A-1 402 235**

(73) Patentinhaber: **Gebr. Happich GmbH,**
**Postfach 10 02 49 Clausenbrücke 1,**
**D-5600 Wuppertal 1 (DE)**

(72) Erfinder: **Cziptschirsch, Kurt, Am Heckendorn 43,**
**D-5600 Wuppertal 2 (DE)**
Erfinder: **Dietz, Günter, Eggenbruch 97,**
**D-5600 Wuppertal 1 (DE)**

(74) Vertreter: **Rehders, Jochen, c/o Fa. Gebr. Happich GmbH**
**Postfach 10 02 49 Clausenbrücke 1,**
**D-5600 Wuppertal 1 (DE)**

## Schwenklager für Sonnenblenden

Die Erfindung bezieht sich auf ein Schwenklager für Sonnenblenden, mit einem von einem Karosserieteil aufgenommenen Lagerböckchen und mit einer Lagerachse, die in einem Lager des Sonnenblendenkörpers aufgenommen ist.

Schwenklager für Sonnenblenden, also Lagerausbildungen, durch die der Sonnenblendenkörper ausser geklappt auch noch geschwenkt werden kann, sind bisher immer zweiteilig ausgebildet, weil zwei unterschiedliche Aufgaben konstruktiv einzeln erfüllt werden müssen. Einmal ist es die Aufnahme, also die Befestigung des Lagerböckchens in der Karosserie, was fast ausschliesslich in einem Durchbruch der Karosseriewandung geschieht. Es sind sowohl Befestigungen mit Befestigungsmitteln, wie Schrauben, als auch Einklipsungen sowie Kombinationen dieser beiden Arten bekannt (DE-C3-26 53 988 und DE-A-25 44 969). Bei allen Befestigungsarten ist jedoch das Lagerböckchen selbst drehfest in der Karosserie aufgenommen. Zum andern besteht die Aufgabe in einer Lagerausbildung (Lagerböckchen/Lagerachse), bei der immer, um unterschiedliche Schwenkstellungen des Sonnenblendenkörpers festlegen zu können, ein überwindbares Drehmoment mit eingebaut ist. Dabei ergibt sich die besondere Schwierigkeit, ein bereichsweise geeignetes und dauerhaftes Drehmoment zu bilden, weil die Lagerachse im allgemeinen nur einen Durchmesser bis 8 mm hat und wegen des geringen Radius nicht gut mit einer Drehmomentausbildung versehen werden kann.

Es ist Aufgabe der Erfindung, ein Schwenklager für Sonnenblenden zu schaffen, welches konstruktiv einfach und billig herzustellen ist, die Schwenk- und Klappbewegung in bekannter Weise zulässt und bei dem das geforderte Drehmoment sicher seine Grösse beibehaltend und dauerhaft wirkend ausgebildet ist.

Diese Aufgabe wird erfindungsgemäss durch die in Anspruch 1 aufgeführten Merkmale gelöst.

Dieser erfindungsgemässen Ausbildung liegen verschiedene Überlegungen zugrunde, so die Beachtung der fortschreitenden Technik, durch die heute schon allein mit den normalen Herstellungsverfahren geeignete als Lagerachsenaufnahme dienende Durchbrüche auch in Metall, wie dem Karosserieblech, herstellbar sind. Solche Lagerachsenaufnahmen sind jedoch leichter und noch glattwandiger in Kunststoff herzustellen. Dies gilt für eine spanabhebende Ausbildung, aber insbesondere für die fix und fertige nachbearbeitungsfreie Ausformung bei der Herstellung von Karosserieteilen. So gelangen in Kürze einstückige Dachhimmel aus Kunststoff zum serienmässigen Einsatz, in die eine Lageraufnahme einbringbar ist, die alle nur erdenklichen hierfür notwendigen Forderungen, ohne jede Mehrarbeit und ohne jeden zusätzlichen Materialeinsatz, erfüllt. Eine weitere Überlegung geht dahin, auf eine gesonderte Lagerachse mit Drehmoment zu verzichten und das Lagerböckchen zu einer Lagerachse umzufunktionieren. Hier kann in vielfältiger Weise auf die allgemeine Verwendung von Lagerachsen aus Kunststoff zurückgegriffen werden, von denen alle sich ergebenden Forderungen ableitbar sind. Auch die Überlegung, dass bei einem grösseren Radius die geforderte Drehmomentausbildung leichter, einfacher, genauer und sicherer wirkend verwirklicht werden kann, hat die erfindungsgemässe Ausführung beeinflusst. Die Lageraufnahme im Karosserieteil und auch das gleichzeitig als Lagerachse dienende Lagerböckchen können nämlich einen ausreichend grossen Durchmesser aufweisen, der eine sichere Lagerung erfüllt und vor allem durch den ein einkonstruiertes Drehmoment auf die gesamte Gebrauchsdauer gleichbleibend, also ohne Hemmungen oder Leichtgängigkeiten, erhalten bleibt.

Zur Wertung der Erfindung erscheint auch noch erwähnenswert, dass die bisherigen Schwenklager einen vom zu verlangenden Gebrauchswert her nicht vertretbaren Aufwand an Konstruktion und Bearbeitungsvorgängen aufweisen. Denn die Schwenkung wird erfahrungs- und ermittlungsgemäss nur relativ selten vorgenommen. Diese Feststellung kommt der erfindungsgemässen Ausführung insofern zugute, als selbst dann, wenn die Lageraufnahme nur ein gestanzter Durchbruch in einem Karosserieblech ist, dieser ohne jede weitere Bearbeitung das Lagerböckchen auf die gesamte Gebrauchsdauer sicher aufnehmen kann und das aufgegebene Drehmoment unverändert beibehalten bleibt.

Die Lageraufnahme ist einstückig und materialeinheitlich mit der Karosseriewandung oder dem Dachhimmel ausgebildet, so dass zusätzliche Teile für die Lagerausbildung entfallen. Im gleichen Sinne ist es von Vorteil, wenn in Ausgestaltung der Erfindung die aussen umlaufende Lagerbahn eine U-förmige Nut ist, deren in Schenkelrichtung verlaufende Lagerflächen Seitenflächen von Flanschen sind.

Eine geeignete schnelle Montage und trotzdem ein sicherer Halt des Lagerböckchens in seiner Aufnahme werden erreicht, wenn der in Einbaurichtung des Lagerböckchens liegende Flansch der U-förmigen Nut mit einer den Durchmesser verjüngenden Schräge ausgebildet ist.

Es ist zweckmässig, das Fussteil der Lagerachse mit dem äusseren umlaufenden Rand des Lagerböckchens abschliessen zu lassen, denn hierdurch ergeben sich keinerlei Hinterschneidungen, so dass die gesamte Ausbildung (Lagerböckchen/Lagerachse) in einer nur zweiteiligen Form, ohne jeglichen Schieber, einstückig und materialeinheitlich herstellbar ist.

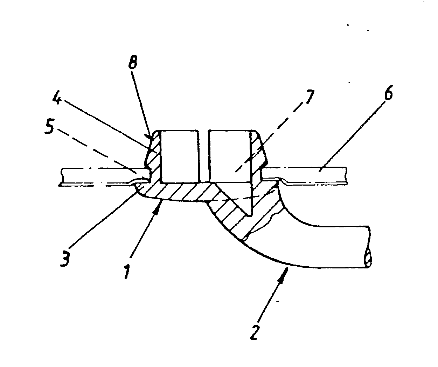

Die Erfindung ist auf der Zeichnung in einem Ausführungsbeispiel im Schnitt dargestellt.

Die einzige Figur der Zeichnung zeigt ein einstückig ausgebildetes Schwenklager.

Das dargestellte Schwenklager ist mit seinem Lagerböckchen 1 und seiner Lagerachse 2 einstückig, beispielsweise als Spritzgusskörper, ausgebildet. Das Lagerböckchen 1 weist aussenseitig einen Flansch 3 und innenseitig einen Flansch 4 auf, wobei eine als U-förmige Nut ausgebildete Lagerbahn 5 zwischengelagert ist. Diese dient, weil aussen umlaufend angeordnet, als Innenlager und wirkt in einem Durchbruch eines Karosserieteiles 6, wie einem Dachhimmel. Der Durchbruch bildet eine Lageraufnahme 7 für das Lagerböckchen 1. Es ist ersichtlich, dass das Lagerböckchen 1 in seiner Lageraufnahme 7 rein konstruktiv so ausgestaltet werden kann, dass einmal eine behinderungsfreie Drehung, in diesem Falle Schwenkung, der Sonnenblende und zum andern durch die Einhaltung gewisser Einbaumasse ein Drehmoment aufgebaut werden kann, welches in seiner Grösse von der Konstruktion her und auch im Gebrauch wegen des relativ grossen Radius in einem engen Bereich konstant bleibend gehalten werden kann.

Bei der Materialwahl für das Lagerböckchen wird man erfahrungsgemäss einen Kunststoff wählen, welcher zusammendrückbare und sich zurückbildende Eigenschaften aufweist. Diese Möglichkeit wird ausgenutzt, um zur Befestigung eine Klipsausbildung mit einzubauen, deren konstruktive Ausgestaltung durch eine zum Einsteckende hin sich verjüngende Schräge 8 des inneren Flansches 4 gebildet ist.

Es bleibt der geeignete Ansatzpunkt der Lagerachse 2 an die umlaufende Kante des aussen liegenden Flansches 3 anzuführen, der den fertigungstechnischen Vorteil erbringt, die gesamte einstückige Ausbildung in einer nur zweiteiligen Form und ohne jeglichen Schieber herstellen zu können.

**Patentansprüche**

1. Schwenklager für Sonnenblenden, mit einem von einem Karosserieteil (6) aufgenommenen Lagerböckchen (1) und mit einer Lagerachse (2), die in einem Lager des Sonnenblendenkörpers aufgenommen ist, dadurch gekennzeichnet, dass das Lagerböckchen (1) mit der Lagerachse (2) des Schwenklagers einstückig und materialeinheitlich ausgebildet ist und eine aussen umlaufende Lagerbahn (5) aufweist, welche in einer Lageraufnahme (7) gehalten ist, die einstückig mit dem Karosserieteil (6), wie der Karosseriewandung oder dem Dachhimmel, ist.

2. Schwenklager nach Patentanspruch 1, dadurch gekennzeichnet, dass die aussen umlaufende Lagerbahn (5) eine U-förmige Nut ist, deren in Schenkelrichtung verlaufende Lagerflächen Seitenflächen von Flanschen (3 und 4) sind.

3. Schwenklager nach Patentanspruch 2, dadurch gekennzeichnet, dass der in Einbaurichtung des Lagerböckchens (1) liegende Flansch (4) der U-förmigen Nut mit einer den Durchmesser verjüngenden Schräge (8) ausgebildet ist.

4. Schwenklager nach einem oder mehreren der vorangehenden Patentansprüche, dadurch gekennzeichnet, dass die Lagerachse (2) mit ihrem Fussteil mit dem äusseren umlaufenden Rand (Flansch 3) des Lagerböckchens (1) abschliesst.

**Claims**

1. A pivot bearing for a sun visor, the bearing comprising a bearing block (1) retainable in a vehicle-body element (6) and a bearing shaft (2) held in another bearing in the sun-visor body, characterized in that the bearing block (1) and the bearing shaft (2) of the pivot bearing are formed from one and the same material into a one-piece unit, and in that the block is provided with an external circular bearing track (5) retainable in a bearing retainer (7) which is integral with the vehicle-body element (6) such as a wall of the vehicle body or the head-liner thereof.

2. A pivot bearing according to claim 1, characterized in that the external circular track (5) is a U-shaped groove the bearing surfaces of which extend in the direction of its legs and are side faces of flanges (3 and 4).

3. A pivot bearing according to claim 2, characterized in that the U-shaped groove's flange (4) disposed in the direction of mounting the bearing block (1) is provided with a diameter-reducing bevel (8).

4. A pivot bearing according to claim 3, characterized in that the stem of the bearing shaft (2) terminates at the external circular surface (flange 3) of the bearing block (1).

**Revendications**

1. Support pivotant pour pare-soleil, comprenant une embase (1) monté dans un élément de carrosserie (6) et un axe de support (2) logé dans un évidement de montage du corps du pare-soleil, caractérisé en ce que l'embase (1) est formée en une seule pièce et dans le même matériau avec l'axe de support (2) du support pivotant et comprend une surface de support périphérique externe (5) qui est retenue dans un logement de support (7) pratiqué directement dans l'élément de carrosserie (6), tel que la paroi de la carrosserie ou l'habillage de plafond.

2. Support pivotant selon la revendication 1, caractérisé en ce que la surface de support périphérique externe (5) se présente sous la forme d'une gorge en «U», dont les surfaces de support orientées en direction des branches sont des surfaces latérales de joues (3 et 4).

3. Support pivotant selon la revendication 2, caractérisé en ce que la joue (4) de la gorge en «U» qui est orientée en direction de l'enfoncement de l'embase (1) comprend une partie biseautée (8) qui en réduit le diamètre.

4. Support pivotant selon la revendication 3, caractérisé en ce que l'axe de support (2) se termine par son pied au rebord périphérique externe (joue 3) de l'embase (1).